# EUROPÄISCHE PATENTSCHRIFT

(11) **EP 1 108 156 B1**
(45) Veröffentlichungstag und Bekanntmachung des Hinweises auf die Patenterteilung: **05.11.2003**
(21) Anmeldenummer: 00938513.9
(22) Anmeldetag: 27.04.2000
(51) Int. Cl.: F16F 1/373, B60G 13/00, B60G 15/02

(54) **FEDERBEINLAGER**
SUSPENSION-STRUT BEARING
APPUI DE JAMBE DE FORCE

(30) Priorität: 29.04.1999 DE 19919189
(43) Veröffentlichungstag der Anmeldung: 20.06.2001
(73) Patentinhaber: ZF Lemförder Metallwaren AG, 49441 Lemförde (DE)
(72) Erfinder: SCHNAARS, Wolfgang, D-49086 Osnabrück (DE); LUX, Ulrich, D-80939 München (DE); KAINZ, Peter, D-85122 Hitzhofen (DE); SAND, Michael, D-85080 Gaimersheim (DE)
(86) Internationale Anmeldenummer: DE0001308
(87) Internationale Veröffentlichungsnummer: WO00066909

(56) Entgegenhaltungen:
- EP-A- 0 381 566
- DE-A- 4 326 197
- FR-A- 2 710 381
- US-A- 4 465 296
- US-A- 4 478 396
- US-A- 5 263 692
- PATENT ABSTRACTS OF JAPAN vol. 1995, no. 01, 28. Februar 1995 (1995-02-28) & JP 06 280939 A (KINUGAWA RUBBER IND CO LTD), 7. Oktober 1994 (1994-10-07)
- PATENT ABSTRACTS OF JAPAN vol. 007, no. 063 (M-200), 16. März 1983 (1983-03-16) & JP 57 208332 A (TOYO GOMU KOGYO KK;OTHERS: 01), 21. Dezember 1982 (1982-12-21)

## Beschreibung

Die Erfindung betrifft ein Federbeinlager zur oberen Anbindung eines Federbeines in einem Kraftfahrzeug.

Federbeinlager bekannter Bauarten dienen dazu, die an der Radaufhängung eines Kraftfahrzeuges entstehenden Schwingungen von der Karosserie fernzuhalten.

Die mit dem Federbeinlager verbundenen, oberen Enden der Federbeine sind dabei zumeist in einer Dämpfüngsfeder aufgenommen, die sich am unteren Außenumfang des Federbeinlagers abstützt. Bekannt ist diese Radaufhängungsart als Mac Pherson-Prinzip.

Eine derartige Aufhängungslagerung mit einem Federbeinlager geht beispielsweise aus der DE 43 26 197 A1 hervor. Die in der genannten Schrift offenbarte Lösung enthält ein Federbeinlager mit einem metallischen Innenteil, in dem zur Montage des oberen Endes des Federbeins eine zentrale Durchgangsbohrung vorhanden ist. Am Außenumfang des metallischen Innenteiles ist ein umlaufender Elastomerkörper angespritzt. Das metallische Innenteil wird zusammen mit dem diesen umgebenen Elastomerkörper in einem elastischen Lagerkörper aufgenommen. Das gesamte Federbeinlager wird dann in ein metallisches Gehäuse eingesetzt, welches an der Karosserie des Kraftfahrzeuges festlegbar ist. Die über das Federbeinende sowie über die an der Unterseite des Federbeinlagers anliegende Feder auf das Federbeinlager übertragenen Schwingungen der Radaufhängung werden in den vorhandenen Elastomerkörpern gedämpft, sodaß insgesamt eine Entkopplung der Schwingungen realisiert wird.

Bei einer derartigen Federbeinlagerausführung ist es jedoch nachteilig, daß insbesondere quer zur Längsrichtung des Federbeines verlaufende Bewegungen desselben nahezu nicht gedämpft werden. Der elastische Lagerkörper ist ferner unmittelbar in einem metallischen Gehäuse aufgenommen und hat dementsprechend fast keine Bewegungsfreiheit. Der Aufbau des beschriebenen Federbeinlagers ist zwar sehr einfach, jedoch wird es infolge seiner relativ harten Federungscharakteristik gehobenen Komfortansprüchen nicht hinreichend gerecht.

Aus der US 4,478,396 ist ein Federbeinlager zur oberen Anbindung eines Federbeines in einem Kraftfahrzeug bekannt, das ein Innenteil mit einer zentralen Durchgangsbohrung zur Aufnahme des oberen Endes des Federbeines aufweist. Am Außenumfang des Innenteiles ist ein Elastomerkörper umlaufend angeordnet, der gemäß der Offenbarung dieser Schrift etwa mittig geteilt ausgeführt ist.

Der Erfindung liegt die technische Problemstellung zugrunde, ein Federbeinlager zur oberen Anbindung eines Federbeines in einem Kraftfahrzeug zu entwickeln, bei dem die Entkopplung der an der Radaufhängung entstehenden Schwingungen gegenüber der Fahrzeugkarosserie auch hohen Komfortansprüchen gerecht wird. Das Federbeinlager soll einfach aufgebaut und kostengünstig herstellbar sein, sodaß es mit möglichst wenig Montageschritten produziert werden kann. Dementsprechend ist ein Niontageverfahren für ein derartiges Federbeinlager zu entwickeln.

Die Erfindung löst diese technische Problemstellung mit den Merkmalen des Patentanspruches 1 sowie den Verfahrensmerkmalen des Patentanspruches 17.

Danach weist ein erfindungsgemäßes Federbeinlager zur oberen Anbindung eines Federbeines in einem Kraftfahrzeug ein Innenteil mit einer zentralen Durchgangsbohrung zur Aufnahme des oberen Endes eines Federbeines auf. Am Außenumfang des Innenteiles ist umlaufend ein Elastomerkörper angeordnet. Das Innenteil mit dem Elastomerkörper ist zudem innerhalb eines elastischen Lagerkörpers aufgenommen. Im Unterschied zu den aus dem Stand der Technik bekannten Lösungen, wird jedoch zwischen dem Innenteil mit dem daran angeformten Elastomerkörper und dem elastischen Lagerkörper ein Käfig vorgesehen. Dieser nimmt das Innenteil zusammen mit dem Elastomerkörper vollständig auf. Der Käfig ist seinerseits bis auf einen beiderseitigen Öffnungsquerschnitt zur Einführung und Befestigung des oberen Endes des Federbeines vollständig in dem elastischen Lagerkörper aufgenommen.

Zumindest der Käfig der Lagerkörper und ein den Lagerkörper zumindest teilweise umschließender Sicherungsring sind in einer, durch die Längsmittenachse des Federbeinlagers verlaufenden Ebene geteilt.

Eine derartige Federbeinlagerausführung ist sehr einfach aufgebaut, kann kostengünstig hergestellt werden und wird als vorgefertigte Montageeinheit direkt in das Kraftfahrzeug eingesetzt und anschließend mit dem Federbein beziehungsweise der Kraftfahrzeugkarosserie verbunden.

Weitere Ausgestaltungen der Erfindung sind Gegenstand der Unteransprüche.

So wird beispielsweise vorgeschlagen, an der äußeren Oberfläche des elastischen Lagerkörpers einen Flansch anzuformen. Dieser Flansch besteht in vorteilhafter Weise aus zwei Stegen, zwischen denen ein Sicherungsring eingesetzt ist.

Das Innenteil sollte aus Stabilitätsgründen bevorzugt als metallisches Innenteil mit einer annähernd scheibenförmigen Geometrie ausgeführt werden, wobei der Umfangsrandbereich des metallischen Innenteiles wulstförmig sein kann oder eine Wulst bildet. Die wulstförmige Ausführung erleichtert die Befestigung des daran vorzugsweise durch Anspritzen angebrachten Elastomerkörpers. Diese vorfertigbare, kleinste Einheit eines erfindungsgemäßen Federbeinlagers ermöglicht es ferner während des Herstellungsprozesses an dem Elastomerkörper Anlageflächen zur Aufnahme und Führung des Federbeines beziehungsweise zur Unterstützung seiner Befestigung oder Montage im Kraftfahrzeug anzuformen. Ferner kann der Elastomerkörper durch seine Gestaltung zur Komfortsteigerung beitragen, in dem gemäß einer weiteren Ausgestaltung der Erfindung wenigstens einseitig Dämpfungspuffer an dem Elastomerkörper angeformt sind. Diese Dämpfungspuffer können unterschiedliche Geometrien aufweisen.

Eine weitere sehr vorteilhafte Ausgestaltung der Erfindung sieht vor, den Käfig, den Lagerkörper und den Sicherungsring aus jeweils zwei baugleichen, mittig geteilten Einzelteilen zusammenzusetzten. Durch eine derartige Maßnahme wird das Federbeinlager gemäß der vorgestellten Erfindung erheblich vereinfacht. Zudem wird insgesamt die Zahl der Einzelteile reduziert, was entscheidende Kostenvorteile mit sich bringt.

Der Sicherungsring, welcher insgesamt dazu dient ein erfindungsgemäßes Federbeinlager als vorgefertigte Baueinheit zusammenzuhalten weist weiterhin eine Besonderheit auf. Er kann nämlich aus zwei deckungsgleichen Sicherungsringhälften hergestellt werden. Diese Sicherungsringhälften weisen einseitig jeweils einen Anschlußzapfen und auf der gegenüberliegenden Sicherungsringhälftenseite eine hierzu komplementäre Aufnahme auf, sodaß die beiden Sicherungsringhälften miteinander koppelbar sind. Hergestellt werden muß jedoch nur eine Sicherungsringhälfte in zweifacher Ausfertigung.

Gemäß einer weiteren Ausgestaltung der Erfindung soll ferner jede der durch die Teilung gebildeten Käfighalbschalen an ihrem Käfigmantelumfang einen Justierzapfen aufweisen, der in eine komplementäre Justiernut der zugeordneten anderen Käfighalbschale einrückbar ist. Da die Käfighalbschalen erfindungsgemäß baugleich ausgeführt sind, weist jede Käfighalbschale sowohl eine Justiernut als auch einen Justierzapfen auf Diese sind vorzugsweise am Käfigmantelumfang angeordnet. Die durch die Teilung gebildeten Käfighalbschalen bilden vor der Aufnahme des Elastomerkörpers mit dem darin angeordneten Innenteil einen Vormontagezustand, der durch einen vergrößerten, beispielsweise leicht konisch ausgeführten Öffnungsquerschnitt charakterisiert ist. Durch diesen vergrößerten Öffnungsquerschnitt ist es in einfacher Weise möglich, den Elastomerkörper mit dem innerhalb dieses Elastomerkörpers angeordneten Innenteil in den Käfig einzusetzen ohne dabei einen erheblichen Widerstand überwinden zu müssen. Die Bauteile sind somit leicht zusammenfügbar. Die gesamte Baugruppe wird anschließend durch einen auf den Käfigmantelumfang aufgesetzten Haltering zusammengehalten und damit gesichert.

Weiterhin wird es bei einem erfindungsgemäßen Federbeinlager als sinnvoll erachtet, beispielsweise den Lagerkörper mit einer zu der Außenkontur des Käfigs komplementären Innenkontur auszustatten. Um den gehobenen Komfortansprüchen gerecht zu werden und einen Toleranzausgleich zu erreichen, ist es darüber hinaus möglich, an der Außenkontur des Elastomerkörpers und / oder des Lagerkörpers Dämpfüngspuffer anzuformen.

Die Unterseite des Lagerkörpers sollte ferner mit einer Geometrie ausgestattet sein, die dem daran anliegenden Federteller angepaßt ist.

In Kenntnis der zuvor beschriebenen technischen Merkmale eines erfindungsgemäßen Federbeinlagers ergibt sich folgende vorteilhafte Montagereihenfolge eines bevorzugten, erfindungsgemäßen Federbeinlagers:
- Einsatz des mit dem Elastomerkörper ummantelten Innenteiles in die Käfighalbschalen des Käfigs,
- Zusammenrügen der Käfighalbschalen,
- Aufschieben des Halteringes auf den Käfigmantelumfang,
- Axiale Verformung sowohl der Ober- als auch der Unterseite des Käfigs, sodaß der Elastomerkörper unter axialer Vorspannung in dem Käfig aufgenommen ist,
- Ansatz der Halbschalen des Lagerkörpers an der Außenoberfläche des Käfigs,
- Einsatz des Sicherungsringes in die durch die Stege des Flansches gebildete Aufnahmenut unter gleichzeitiger Verbindung der beiden Sicherungsringhälften.

Die vorstehend genannten und nachstehend noch zu erläuternden Merkmale können jeweils nicht nur in der Alleinstellung, sondern auch in beliebiger Kombination untereinander oder mit an sich bekannten Merkmalen aus dem Stand der Technik verwendet werden, ohne dabei den Rahmen der Erfindung zu verlassen.

Ein bevorzugtes Ausführungsbeispiel eines erfindungsgemäßen Federbeinlagers wird nachstehend unter Bezugnahme auf die zugehörigen Zeichnungen näher erläutert.
Es zeigen:

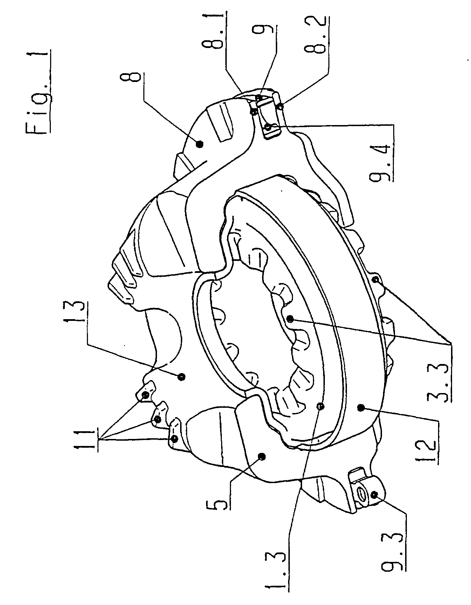

- Figur 1:: die Darstellung einer Hälfte eines Federbeinlagers in räumlicher Ansicht,
- Figur 2:: einen Schnitt durch ein erfindungsgemäßes Federbeinlager,
- Figur 3:: ausschnittsweise einen Schnitt durch ein Innenteil mit einem daran angeformten Elastomerkörper,
- Figur 4:: eine räumliche Darstellung einer Käfighalbschale und
- Figur 5:: eine Sicherungsringhälfte.

In den Figuren ist insgesamt eine bevorzugte Ausführung eines Federbeinlagers zur oberen Anbindung eines Federbeines in einem Kraftfahrzeug dargestellt, wie es als komplette Montageeinheit vorgefertigt herstellbar ist. Ein derartiges Federbeinlager weist ein Innenteil 1 auf, daß über eine Durchgangsbohrung 2 verfügt. Durch die Durchgangsbohrung 2 wird das obere Ende des Federbeines hindurchgeführt und anschließend beispielsweise mittels einer Schraubverbindung an dem Federbeinlager festgelegt. Das vorliegend aus Aluminium hergestellte, metallische Innenteil 1 ist an seinem als Wulst 1.1 oder wulstförmig ausgeführten Außenumfang mit einem Elastomerkörper 3 stoffschlüssig verbunden. Vorliegend wurde die Wulst 1.1 als Elastomerkörper ausgeführt, der an dem scheibenförmigen Innenteil 1 angebracht ist.

Der Elastomerkörper 3 weist Anlageflächen beziehungsweise Führungsflächen 3.1 und 3.2 auf, die der Erleichterung der Montage des Federbeines sowie dessen Führung und Positionierung in dem Federbeinlager dienen. An der Ober- und der Unterseite des Elastomerkörpers 3 sind zudem Dämpfüngspuffer 3.3 angeformt. Diese Dämpfungspuffer gestatten eine axial beliebig weich ausführbare Dämpfungscharakteristik. Das mit dem Elastomerkörper 3 umspritzte Innenteil 1 ist insgesamt in zwei baugleich ausgeführten Käfighalbschalen 4.1 und 4.2 aufgenommen. Die Käfighalbschalen 4.1 und 4.2 bilden zusammen den Käfig 4. Zur Vereinfachung der Montage der Käfighalbschalen 4.1 und 4.2, ist an dem Käfigmantelumfang 4.3 einer jeden Käfighalbschale sowohl ein Justierzapfen 4.4 angeformt, als auch eine Justiernut 4.5 eingebracht. Der Justierzapfen 4.4, der ersten Käfighalbschale 4.1 greift dabei in die Justiernut 4.5 der zweiten Käfighalbschale 4.2 ein, sodaß eine axiale Sicherung gewährleistet ist. Um einen Zusammenhalt des Käfigs zu ermöglichen, wird an seinem Käfigmantelumfang 4.3 ein Haltering 12 aufgezogen.

Der Käfig 4 wird insgesamt in einen Lagerkörper 5 aus elastischem Werkstoff eingesetzt. Die Unterseite 5.1 des Lagerkörpers 5 weist dabei eine dem in den Figuren nicht gezeigten Federteller 14 angepaßte Geometrie auf. Am Außenumfang des elastischen Lagerkörpers 5 ist ferner ein Flansch 8 angeformt. Dieser besteht vorliegend aus zwei Stegen 8.1 und 8.2, welche eine im Querschnitt gesehen U-förmige Ringnut bilden. Diese Ringnut ist an dem dargestellten elastischen Lagerkörper 5 umlaufend ausgeführt und nimmt zwischen den Stegen 8.1 und 8.2 den Sicherungsring 9 auf

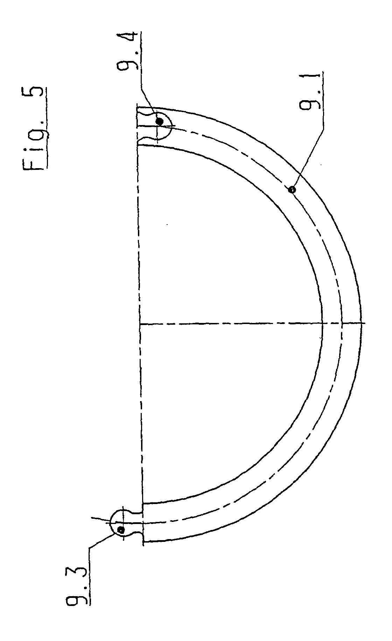

Dieser Sicherungsring 9 besteht seinerseits aus zwei Sicherungsringhälften 9.1 und 9.2, von denen eine Sicherungsringhälfte 9.1 beispielhaft in der Figur 5 gezeigt ist. Die Sicherungsringhälften 9.1 und 9.2 sind baugleich ausgeführt und verfügen jeweils über einen Anschlußzapfen 9.3, der in eine komplementäre Aufnahme 9.4 des anderen Sicherungsringes einsetzbar ist.

Der elastische Lagerkörper 5 ist ferner an seiner oberen, in das Kraftfahrzeug einsetzbaren Oberfläche mit Dämpfüngspuffern 11 beziehungsweise 13 ausgestattet. Diese an dem elastischen Lagerkörper 5 angeformten Dämpfungspuffer dienen einer Komfortsteigerung des Kraftfahrzeuges. Die Dämpfüngspuffer 11 sind vorliegend als schmale Stege ausgeführt, während die Dämpfungspuffer 13 ein erheblich größeres Volumen aufweisen und die Dämpfüngspuffer 11 tragen. Die Kombination der Dämpfüngspuffer 11 mit den Dämpfüngspuffern 13 entspricht annähernd einer Reihenschaltung mehrerer Federn mit unterschiedlichen Federkonstanten. Außerdem ist es mittels der Dämpfüngspuffer 11 möglich, einen Toleranzausgleich innerhalb des Federbeinlagers zu erreichen.

In dem elastischen Lagerkörper 5 ist darüber hinaus ein Öffnungsquerschnitt 7 vorhanden, in den das obere Ende des Federbeines mittelbar oder unmittelbar einsetzbar ist. Der Öffnungsquerschnitt 6 im Oberteil des elastischen Lagerkörpers 5 ist zur Herstellung einer Schraubverbindung des oberen Federbeines mit dem Innenteil 1 des erfingungsgemäßen Federbeinlagers vorgesehen.

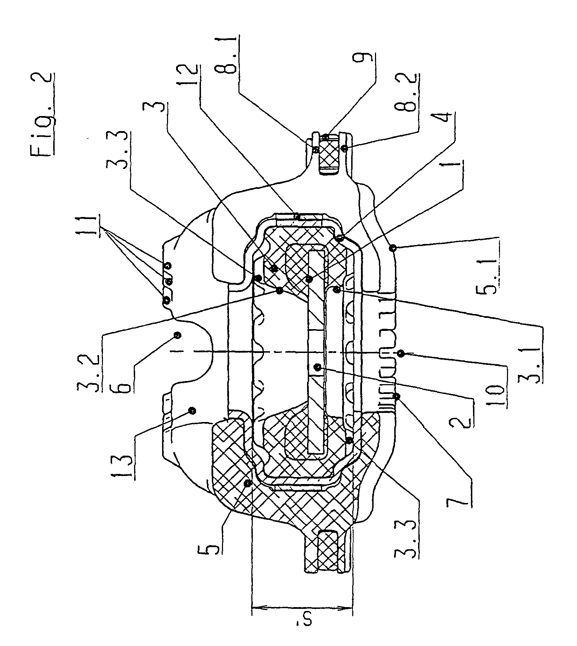

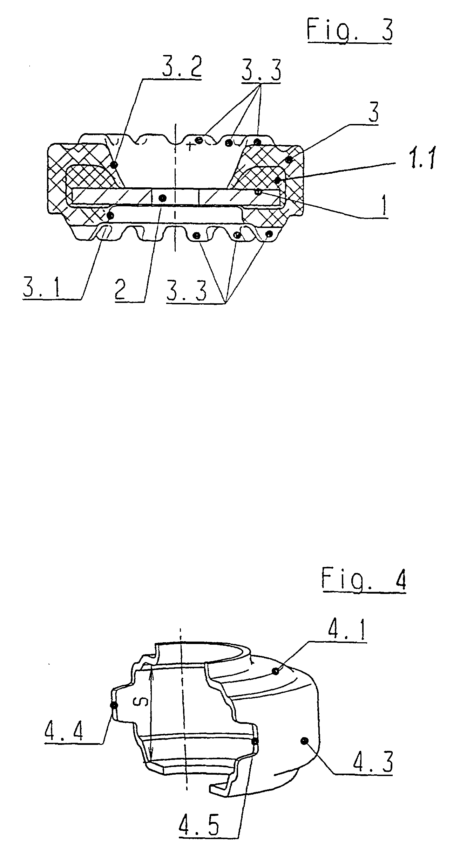

In der Figur 4 ist das Abstandsmaß "**s**" durch einen Pfeil zwischen den Innenoberflächen des Käfigs 4 kenntlich gemacht. Dieses den Vormontagezustand kennzeichnende Abstandsmaß "**s**" wird nach der Montage auf das in der Figur 2 eingezeichnete, reduzierte Abstandsmaß

"**s'** " vermindert, sodaß der in dem Käfig 4 aufgenommene Elastomerkörper 3 mit dem darin angeordneten Innenteil 1 unter einer axialen Vorspannung in dem Käfig 4 aufgenommen ist.

Das erfindungsgemäße Federbeinlager, zumindest jedoch der Käfig 4, der Sicherungsring 9 sowie der elastische Lagerkörper 5 sind mittig geteilt ausgeführt. Der Schnitt verläuft dabei in einer durch die Längsmittenachse 10 des erfindungsgemäßen Federbeinlagers verlaufenden Ebene.

### Bezugszeichenliste:

- 1: Innenteil
- 1.1: Wulst
- 2: Durchgangsbohrung
- 3: Elastomerkörper
- 3.1,3.2: Anlagefläche
- 3.3: Dämpfungspuffer
- 4: Käfig
- 4.1,4.2: Käfighalbschale
- 4.3: Käfigmantelumfang
- 4.4: Justierzapfen
- 4.5: Justiernut
- 5: Lagerkörper
- 5.1: Unterseite des Lagerkörpers
- 6, 7: Öffnungsquerschnitt
- 8: Flansch
- 8.1, 8.2: Steg
- 9: Sicherungsring
- 9.1, 9.2: Sicherungsringhälften
- 9.3: Anschlußzapfen
- 9.4: Aufnahme
- 10: Längsmittenachse
- 11: Dämpfüngspuffer
- 12: Haltering
- 13: Dämpfungspuffer
- 14: Federteller
- s: Abstandsmaß vor Montage
- s': Abstandsmaß nach Montage

## Patentansprüche

1. Federbeinlager zur oberen Anbindung eines Federbeines in einem Kraftfahrzeug mit:
- einem Innenteil (1) mit einer zentralen Durchgangsbohrung (2) zur Aufnahme des oberen Endes des Federbeines,
- einem umlaufend am Außenumfang des Innenteiles (1) angeordneten Elastomerkörper (3)
- einem das Innenteil (1) mit dem Elastomerkörper (3) aufnehmenden Käfig (4),
- einem elastischen Lagerkörper (5), der den Käfig (4) bis auf einen beiderseitigen Öffnungsquerschnitt (6, 7) vollständig aufnimmt, wobei zumindest der Käfig (4), der Lagerkörper (5) und ein den Lagerkörper umgreifender Sicherungsring (9) in einer durch die Längsmittenachse (10) des Federbeinlagers verlaufenden Ebene geteilt sind.

2. Federbeinlager nach Anspruch 1,
**dadurch gekennzeichnet, daß**
der Lagerkörper (5) einen an seiner äußeren Oberfläche angeformten Flansch (8) aufweist, zwischen dessen Stegen (8.1, 8.2) der Sicherungsring (9) eingesetzt ist.

3. Federbeinlager nach Anspruch 1 oder 2,
**dadurch gekennzeichnet, daß**
das metallische Innenteil (1) annähernd eine Scheibenform aufweist.

4. Federbeinlager nach einem der vorstehend genannten Ansprüche,
**dadurch gekennzeichnet, daß**
der Umfangsrandbereich des Innenteiles (1) wulstförmig ausgeführt ist oder eine Wulst (1.1) bildet.

5. Federbeinlager nach Anspruch 4,
**dadurch gekennzeichnet, daß**
das Innenteil (1) von dem Elastomerkörper (3) umspritzt ist.

6. Federbeinlager nach Anspruch 5,
**dadurch gekennzeichnet, daß**
der Elastomerkörper (3) Anlageflächen (3.1, 3.2) zur Aufnahme und Führung des Federbeines beziehungsweise seiner Befestigung aufweist.

7. Federbeinlager nach Anspruch 5 oder 6,
**dadurch gekennzeichnet, daß**
der Elastomerkörper (3) wenigstens einseitig Dämpfungspufier (3.3) aufweist.

8. Federbeinlager nach mindestens einem der vorstehenden Ansprüche,
**dadurch gekennzeichnet, daß**
der Käfig (4), der Lagerkörper (5) und der Sicherungsring (9) aus jeweils zwei baugleichen, mittig geteilten Einzelteilen zusammengesetzt sind.

9. Federbeinlager nach Anspruch 8,
**dadurch gekennzeichnet, daß**
jede der durch die Teilung gebildeten Sicherungsringhälften (9.1, 9.2) jeweils einseitig einen Anschlußzapfen (9.3) aufweist, der in eine komplementäre Aufnahme (9.4) der zugeordneten anderen Sicherungsringhälfte einsetzbar oder einrastbar ist.

10. Federbeinlager nach Anspruch 8 oder 9,
**dadurch gekennzeichnet, daß**
jede der durch die Teilung gebildeten Käfighalbschalen (4.1, 4.2) an ihrem Käfigmantelumfang (4.3) einen Justierzapfen (4.4) aufweist, der in eine komplementäre Justiernut (4.5) der zugeordneten anderen Käfighalbschale einrückbar oder einrastbar ist.

11. Federbeinlager nach einem Ansprüche 8 bis 10,
**dadurch gekennzeichnet, daß**
die durch die Teilung gebildeten Käfighalbschalen (4.1, 4.2) vor der Aufnahme des Elastomerkörpers (3) mit dem darin angeordneten Innenteil (1) einen Vormontagezustand mit einem vergrößerten, beispielsweise leicht konischen Öffnungsquerschnitt aufweisen.

12. Federbeinlager nach mindestens einem der vorstehenden Ansprüche,
**dadurch gekennzeichnet, daß**
der Elastomerkörper (3) mit dem darin angeordneten Innenteil (1) unter axialer Vorspannung in dem Käfig (4) aufgenommen ist.

13. Federbeinlager nach mindestens einem der vorstehenden Ansprüche,
**dadurch gekennzeichnet, daß**
der Käfig (4) durch einen Haltering (12) gesichert ist.

14. Federbeinlager nach mindestens einem der vorstehenden Ansprüche,
**dadurch gekennzeichnet, daß**
der Lagerkörper (5) eine zu der Außenkontur des Käfigs (4) komplementäre Innenkontur aufweist.

15. Federbeinlager nach mindestens einem der vorstehenden Ansprüche,
**dadurch gekennzeichnet, daß**
der Lagerkörper (5) an seiner Außenkontur Dämpfungspuffer (11 und / oder 13) aufweist.

16. Federbeinlager nach mindestens einem der vorstehenden Ansprüche,
**dadurch gekennzeichnet, daß**
der Lagerkörper (5) an seiner Unterseite (5.1) eine dem daran anliegenden Federteller (14) angepaßte Geometrie aufweist.

17. Verfahren zur Montage eines Federbeinlagers nach einem der vorstehend genannten Ansprüche 13-16,
**gekennzeichnet durch** folgende Montageschritte:
- Einsatz des mit dem Elastomerkörper (3) ummantelten Innenteiles (1) in die Käfighalbschalen (4.1, 4.2) des Käfigs (4),
- zusammenfügen der Käfighalbschalen (4.1, 4.2) des Käfigs (4),
- Aufschieben des Halteringes (12) auf den Käfigmantelumfang (4.3),
- axiale Verformung sowohl der Ober- als auch der Unterseite des Käfigs (4), sodaß der Elastomerkörper (3) unter Vorspannung in dem Käfig (4) aufgenommen ist,
- Ansatz der Halbschalen des Lagerkörpers (5) an der Außenoberfläche des Käfigs (4),
- Einsatz des Sicherungsringes (9) in die **durch** die Stege (8.1, 8.2) des Flansches (8) gebildete Aufnahmenut (8.3) unter gleichzeitiger Verbindung der beiden Sicherungsringhälften (9.1, 9.2).

## Claims

1. Suspension strut mounting for the upper connection of a suspension strut in a motor vehicle
comprising:
- an inner part (1) with a central through-bore (2) for receiving the top end of a suspension strut,
- an annular elastomer body (3) disposed around the outer periphery of the inner part (1)
- a cage (4) receiving the inner part (1) with the elastomer body (3),
- an elastic mounting body (5), which receives the entire cage (4) except for an opening cross section (6, 7) at both ends, wherein at least the cage (4), the mounting body (5) and a locking ring (9) embracing the mounting body are divided in a plane extending through the longitudinal centre line (10) of the suspension strut mounting.

2. Suspension strut mounting according to claim 1,
**characterized in that**
formed on the outer surface of the mounting body (5) is a flange (8), between the webs (8.1, 8.2) of which the locking ring (9) is inserted.

3. Suspension strut mounting according to claim 1 or 2,
**characterized in that**
the metal inner part (1) is approximately disk-shaped.

4. Suspension strut mounting according to one of the preceding claims,
**characterized in that**
the peripheral edge region of the inner part (1) is of a bead-shaped design or forms a bead (1.1).

5. Suspension strut mounting according to claim 4,
**characterized in that**
the elastomer body (3) is injection-moulded around the inner part (1).

6. Suspension strut mounting according to claim 5,
**characterized in that**
the elastomer body (3) has locating faces (3.1, 3.2) for receiving and guiding the suspension strut and/or its fastening.

7. Suspension strut mounting according to claim 5 or 6,
**characterized in that**
the elastomer body (3) at least at one side has damping pads (3.3).

8. Suspension strut mounting according to at least one of the preceding claims,
**characterized in that**
the cage (4), the mounting body (5) and the locking ring (9) are composed of in each case two identically constructed, centrally divided individual parts.

9. Suspension strut mounting according to claim 8,
**characterized in that**
each of the locking ring halves (9.1, 9.2) formed by the division has at one end a connection pin (9.3), which is insertable or latchable into a complementary receiver (9.4) of the associated other locking ring half.

10. Suspension strut mounting according to claim 8,
**characterized in that**
each of the cage half-shells (4.1, 4.2) formed by the division has on its cage case periphery (4.3) an aligning pin (4.4), which is engageable or latchable into a complementary aligning groove (4.5) of the associated other cage half-shell.

11. Suspension strut mounting according to one of claims 8 to 10,
**characterized in that**
the cage half-shells (4.1, 4.2) formed by the division, prior to receiving the elastomer body (3) with the inner part (1) disposed therein, present a preassembly state with an enlarged, e.g. slightly conical opening cross section.

12. Suspension strut mounting according to at least one of the preceding claims,
**characterized in that**
the elastomer body (3) with the inner part (1) disposed therein is accommodated under axial bias in the cage (4).

13. Suspension strut mounting according to at least one of the preceding claims,
**characterized in that**
the cage (4) is secured by means of a retaining ring (12).

14. Suspension strut mounting according to at least one of the preceding claims,
**characterized in that**
the mounting body (5) has an internal contour complementary to the external contour of the cage (4).

15. Suspension strut mounting according to at least one of the preceding claims,
**characterized in that**
the mounting body (5) on its external contour has damping pads (11 and/or 13).

16. Suspension strut mounting according to at least one of the preceding claims,
**characterized in that**
the mounting body (5) at its underside (5.1) has a geometry adapted to the spring cup (14) lying thereon.

17. Method of assembling a suspension strut mounting according to one of the preceding claims 13 - 16,
**characterized by** the following assembly steps:
- insert the inner part (1) encased by the elastomer body (3) into the cage half-shells (4.1, 4.2) of the cage (4),
- join the cage half-shells (4.1, 4.2) of the cage (4) together,
- slip the retaining ring (12) onto the cage case periphery (4.3),
- axially deform both the top and the underside of the cage (4) so that the elastomer body (3) is accommodated under bias in the cage (4),
- put the half-shells of the bearing body (5) on the outer surface of the cage (4),
- insert the locking ring (9) into the receiving groove (8.3) formed by the webs (8.1, 8.2) of the flange (8), while simultaneously connecting the two locking ring halves (9.1, 9.2).

## Revendications

1. Appui de jambe de force à ressort pour fixation supérieure d'une jambe de force à ressort dans un véhicule avec :
- une partie interne (1) avec un alésage central traversant (2) pour loger l'extrémité supérieure de la jambe de force,
- un corps élastomère entourant le périmètre externe de la partie interne (1)
- une cage (4) logeant la partie interne (1) avec le corps élastomère (3),
- un corps de palier élastique (5) logeant complètement la cage (4) à l'exception dune section d'ouverture bilatérale (6, 7) au moins la cage (4), le corps de palier (5) et une bague de sûreté (9) entourant le corps de palier sont divisés dans un plan traversant l'axe médian longitudinal (10) de l'appui de jambe de force.

2. Appui de jambe de force à ressort selon la revendication 1, **caractérisé en ce que** le corps de palier (5) présente une bride conformée (8) au niveau de sa surface externe, la bague de sûreté (9) étant insérée entre les barrettes (8.1, 8.2) de cette bride.

3. Appui de jambe de force à ressort selon la revendication 1 ou 2, **caractérisé en ce que** la partie interne métallique (1) a pratiquement une forme de disque.

4. Appui de jambe de force à ressort selon l'une des revendications précédentes, **caractérisé en ce que** la zone de bord périphérique de la partie interne (1) est en forme de bourrelet ou constitue un bourrelet (1.1).

5. Appui de jambe de force à ressort selon la revendication 4, **caractérisé en ce que** la partie interne (1) est entourée d'un corps élastomère (3) appliqué par injection.

6. Appui de jambe de force à ressort selon la revendication 5, **caractérisé en ce que** le corps élastomère (3) présente des surfaces d'appui (3.1, 3.2) pour la réception et le guidage de la jambe de force, ou pour sa fixation.

7. Appui de jambe de force à ressort selon la revendication 5 ou 6, **caractérisé en ce que** le corps élastomère (3) présente des tampons amortisseurs (3.3) au moins sur un côté.

8. Appui de jambe de force à ressort selon l'une au moins des revendications précédentes, **caractérisé en ce que** la cage (4), le corps de palier (5) et la bague de sûreté (9) sont constitués de deux parties individuelles séparées au milieu, de construction identique.

9. Appui de jambe de force à ressort selon la revendication 8, **caractérisé en ce que** chacune des moitiés de bague de sûreté (9.1, 9.2) résultant de la division présente un tenon de raccordement (9.3) sur un côté, qui peut être introduit ou être encliqueté dans un logement complémentaire (9.4) de l'autre moitié de bague de sûreté opposée.

10. Appui de jambe de force à ressort selon la revendication 8 ou 9, **caractérisé en ce que** chacune des demi-coques de la cage (4.1, 4.2) résultant de la division présente un tenon d'ajustement (4.4) au niveau de son périmètre d'enveloppe de cage (.4.3), lequel tenon peut être introduit ou être encliqueté dans une rainure d'ajustement complémentaire (4.5) de l'autre demi-coque de cage opposée.

11. Appui de jambe de force à ressort selon l'une des revendications 8 à 10, **caractérisé en ce que** les demi-coques de cage (4.1, 4.2) formées par la division constituent, avant le logement du corps élastomère (3) avec la partie interne (1) disposée à l'intérieur, un montage préliminaire **caractérisé par** une section d'ouverture agrandie, par exemple légèrement conique.

12. Appui de jambe de force à ressort selon l'une au moins des revendications précédentes, **caractérisé en ce que** le corps élastomère (3) est logé dans la cage (4), avec la partie interne (1) disposée à l'intérieur de celui-ci sous prétension axiale.

13. Appui de jambe de force à ressort selon l'une au moins des revendications précédentes, **caractérisé en ce que** la cage (4) est maintenue par une bague de retenue (12).

14. Appui de jambe de force à ressort selon l'une au moins des revendications précédentes, **caractérisé en ce que** le corps de palier (5) présente un contour interne complémentaire du contour externe de la cage (4).

15. Appui de jambe de force à ressort selon l'une au moins des revendications précédentes, **caractérisé en ce que** le corps de palier (5) présente des tampons amortisseurs (11 et / ou 13) au niveau de son contour externe.

16. Appui de jambe de force à ressort selon l'une au moins des revendications précédentes, **caractérisé en ce que** le corps de palier (5), à sa partie inférieure (5.1), présente une géométrie adaptée à la coupelle de ressort (14) reposant dessus.

17. Procédé de montage d'un appui de jambe de force à ressort selon l'une des revendications précédentes 13 à 16, **caractérisé par** les phases suivantes :
- Disposition de la partie interne (1) entourée du corps élastomère (3) dans les demi-coques (4.1, 4.2) de la cage (4),
- Assemblage des demi-coques (4.1, 4.2) de la cage (4),
- Remontée de la bague de retenue (12) sur la périphérie de l'enveloppe de la cage (4.3),
- Déformation axiale aussi bien de la partie supérieure que de la partie inférieure de la cage (4), de telle sore que le corps élastomère (3) est logé dans la cage (4)sous une prétension axiale,
- Disposition des demi-coques du corps de palier (5) à la surface externe de la cage (4),
- Introduction de la bague de sûreté (9) dans la rainure de réception (8.3) formée par les barrettes (8.1, 8.2) de la bride (8) avec fixation simultanée des deux moitiés de bague de sûreté (9.1, 9.2).
